# EUROPEAN PATENT APPLICATION

(11) **EP 4 661 178 A1**
(43) Date of publication of application: **10.12.2025**
(21) Application number: 24865693.6
(22) Date of filing: 08.08.2024
(51) Int. Cl.: H01M 50/242, H01M 50/264, H01M 10/6556, H01M 10/613, H01M 10/625, H01M 10/6551, H01M 50/249

(54) **BATTERY PACK AND DEVICE INCLUDING SAME**

(30) Priority: 11.09.2023 KR 20230120507
(71) Applicant: LG Energy Solution, Ltd., Seoul 07335 (KR)
(72) Inventor: BANG, Hyunjoong, Daejeon 34122 (KR); CHOI, Giyoung, Daejeon 34122 (KR)
(74) Representative: Plasseraud IP
(86) International application number: PCT/KR2024/011791
(87) International publication number: WO 2025/058251

(57) **Abstract**

A battery pack according to an embodiment of the present disclosure includes a battery cell stack in which a plurality of battery cells are stacked along one direction; a pack frame that houses the battery cell stack; and a thermal resin plate located between the battery cell stack and the bottom portion of the pack frame, wherein a thermal resin layer formed by applying a thermal resin is located on one surface of the thermal resin plate, and the battery cell stack is fixed to the thermal resin layer, and wherein the thermal resin plate is detachably coupled to the pack frame.

## Description

### [TECHNICAL FIELD]

### Cross-Reference to Related Application(s)

This application claims priority to and the benefit of Korean Patent Application No. 10-2023-0120507, filed on September 11, 2023, with the Korean Intellectual Property Office, the disclosure of which is incorporated herein by reference in its entirety.

The present disclosure relates to a battery pack and a device including the same, and more particularly, to a battery pack that realizes easy separation of battery cells, and a device including the same.

### [BACKGROUND]

The use of mobile devices such as cell phones, laptops, camcorders, and digital cameras has been routinized in modem society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles (EV), hybrid electric vehicles (HEV), plug-in hybrid electric vehicles (P-HEV) and so on. Thus, the necessity to develop the secondary batteries is increasing.

Presently, commercially available batteries include nickel-cadmium batteries, nickel-hydrogen batteries, nickel-zinc batteries, and lithium batteries. Of these batteries, lithium batteries are emerging as the most popular, as they do not suffer from the memory effect, and therefore, are freely rechargeable, have low self-discharge rates, and have high energy density, as compared to nickel-based batteries.

Typically, a lithium secondary battery uses a lithium-based oxide and a carbon material as a positive electrode active material and a negative electrode active material, respectively. The lithium secondary battery includes an electrode assembly fabricated by disposing a separator between a positive electrode plate and a negative electrode plate, which are coated with the positive electrode active material and the negative electrode active material, respectively, and a battery case that hermetically houses the electrode assembly together with an electrolyte.

In general, according to the exterior shapes of battery cases, lithium secondary batteries may be classified into can-shaped secondary batteries fabricated by mounting the electrode assembly in a metal can, and pouch-shaped secondary batteries fabricated by mounting the electrode assembly in a pouch made of an aluminum laminate sheet.

In case of secondary batteries used for small-size devices, two or more battery cells are arranged, and in case of secondary batteries used for medium- and large-size devices such as automobiles, a battery module is used, which includes multiple battery cells electrically connected to each other. In the battery module, the multiple battery cells are connected in series or parallel to form a battery cell stack, which improves the capacity and the power. One or more battery modules may configure a battery pack by being mounted together with various control and protection systems such as a battery disconnect unit (BDU), a battery management system (BMS), and a cooling system.

When configuring a battery pack, it is common to first house battery cells in a module frame to prepare a battery module and then add other components to this battery module to configure a battery pack. In the case of a conventional battery pack, it is manufactured by disposing battery modules in a housing structure such as a pack frame, and such a battery pack is mounted on a vehicle or the like.

Recently, however, battery packs having a structure in which the module frame structure is omitted and multiple battery cells are directly mounted to a pack frame while the cells being located between side plates have been developed.

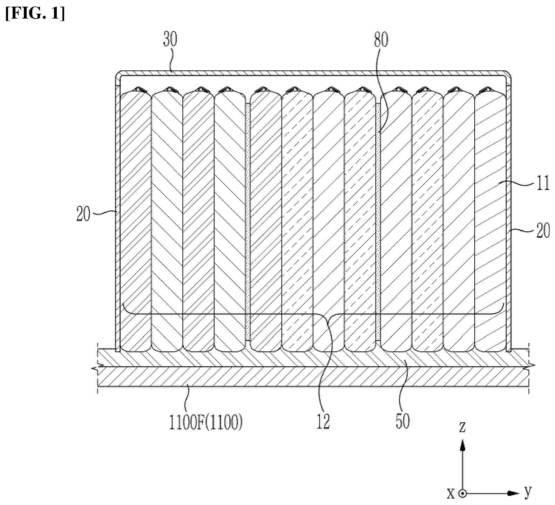

FIG. 1 is a cross-sectional view showing a cross section of a conventional battery pack.

Referring to FIG. 1, conventionally, a plurality of battery cells 11 are stacked to form a battery cell stack 12, and side plates 20 are disposed on each side surfaces of the battery cell stack 12 in the direction in which the battery cells 11 are stacked. The side plates 20 may be connected through a connecting member 30.

This battery cell stack 12 can be directly mounted to the bottom portion 1100F of the pack frame 1100, and a thermal resin layer 50 formed by applying a thermal resin can be located between the battery cell stack 12 and the bottom portion 1100F of the pack frame 1100. Specifically, a thermal resin can be applied onto the bottom portion 1100F of the pack frame 1100 to form the thermal resin layer 50, and the battery cell stack 12 can be disposed on the thermal resin layer 50.

The thermal resin may include a thermally conductive adhesive material, and specifically, it may include at least one of a silicone material, a urethane material, or an acrylic material. This thermal resin layer 50 has excellent thermal conductivity properties and can quickly discharge heat generated from the battery cell 11 to the outside. In addition, the thermal resin layer 50 may be a liquid during application, but may be cured after application, thereby fixing a plurality of battery cells 11 constituting the battery cell stack 12.

However, in the case of conventional battery packs, there is a problem that the bonding reliability of the battery cells 11 to the pack frame 1100 is not constant at the time of impact or vibration. In addition, when a problem occurs in the battery cell 11 and replacement is required, it is difficult to replace the battery cells 11 because the battery cells 11 are adhered to the thermal resin layer 50. In particular, if the battery cell 11 is forcibly replaced, the battery cells 11 may be damaged due to the adhesive force of the thermal resin layer 50.

Therefore, there is a need for the development of technology for battery packs that improves the bonding reliability of the battery cells and can easily replace the battery cells when necessary.

### [DETAILED DESCRIPTION OF THE INVENTION]

### [Technical Problem]

It is an object of the present disclosure to provide a battery pack having excellent bonding reliability of battery cells at the time of impact or vibration, and can easily replace the battery cells when necessary, and a device including the same.

However, the technical objects to be solved by the embodiments of the present disclosure are not limited to those disclosed above, and may be expanded in various ways within the scope of the technical idea included in the present disclosure.

### [Technical Solution]

According to an embodiment of the present disclosure, there is provided a battery pack comprising: a battery cell stack in which a plurality of battery cells are stacked along one direction; a pack frame that houses the battery cell stack; and a thermal resin plate located between the battery cell stack and the bottom portion of the pack frame, wherein a thermal resin layer formed by applying a thermal resin is located on one surface of the thermal resin plate, and the battery cell stack is fixed to the thermal resin layer, and where the thermal resin plate is detachably coupled to the pack frame.

The battery cells may be formed in a sheet shape having a certain thickness, and the battery cells are disposed vertical to one surface of the bottom portion of the pack frame.

The one direction in which the battery cells are stacked may be parallel to the one surface of the bottom portion of the pack frame.

The thermal resin plate may be coupled to the pack frame by a fastening method of a bolt and a nut.

A bolt may be joined to the lower surface of the thermal resin plate, a hole may be formed in the bottom portion of the pack frame, and the bolt passes through the hole and may be fastened with a nut.

The bolt may be welded and joined to the lower surface of the thermal resin plate.

A cooling flow path through which a coolant flows may be formed inside the bottom portion of the pack frame, and the bolt and the hole of the bottom portion may be located to avoid the cooling flow path.

A recessed portion having a shape recessed corresponding to the lower portion of the battery cell is formed on the one surface of the thermal resin plate.

The recessed portions are configured in plural, and the plurality of recessed portions are provided in a one-to-one correspondence with each of the battery cells.

The battery cells may be seated on the recessed portion.

A cooling flow path through which a coolant flows may be formed inside the bottom portion of the pack frame.

According to another embodiment of the present disclosure, there is provided a device comprising the battery pack.

### [Advantageous Effects]

According to embodiments of the present disclosure, the battery cells are located on the thermal resin layer on the thermal resin plate, and the thermal resin plate is detachably coupled to the pack frame, so that the battery cells have excellent bonding reliability and can be easily replaced if necessary.

The effects of the present disclosure are not limited to those described above, and other effects that are not described herein may clearly be understood by one of ordinary skill in the art from the appended claims.

### [BRIEF DESCRIPTION OF THE DRAWING]

FIG. 1 is a cross-sectional view showing a cross section of a conventional battery pack.
FIG. 2 is an exploded perspective view showing a battery cell stack, a side plate, a connecting member, and a thermal resin plate according to an embodiment of the present disclosure.
FIG. 3 is a plan view showing one of the battery cells included in the battery cell stack of FIG. 2.
FIG. 4 is a perspective view showing a battery pack according to an embodiment of the present disclosure.
FIG. 5 is a cross-sectional view showing a cross section cut along the cutting line A-A' of FIG. 4.
FIG. 6 is a partially enlarged view of the portion "B" of FIG. 5.
FIG. 7 is a cross-sectional view showing a cross section cut along the cutting line C-C' of FIG. 4.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals. Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

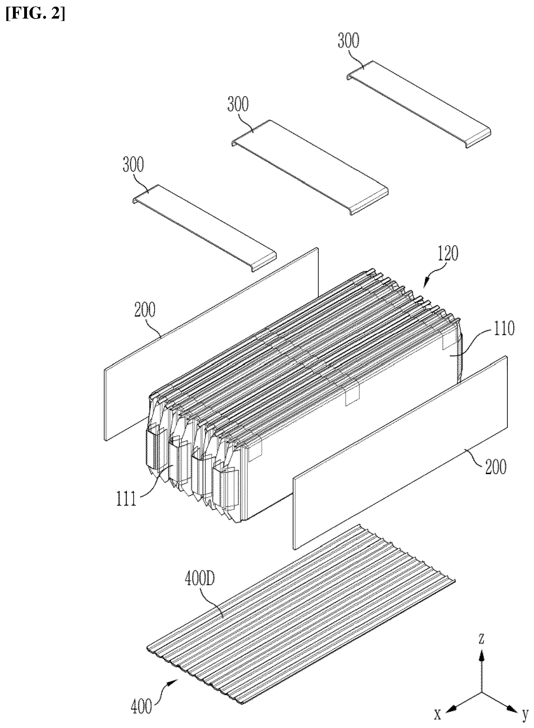

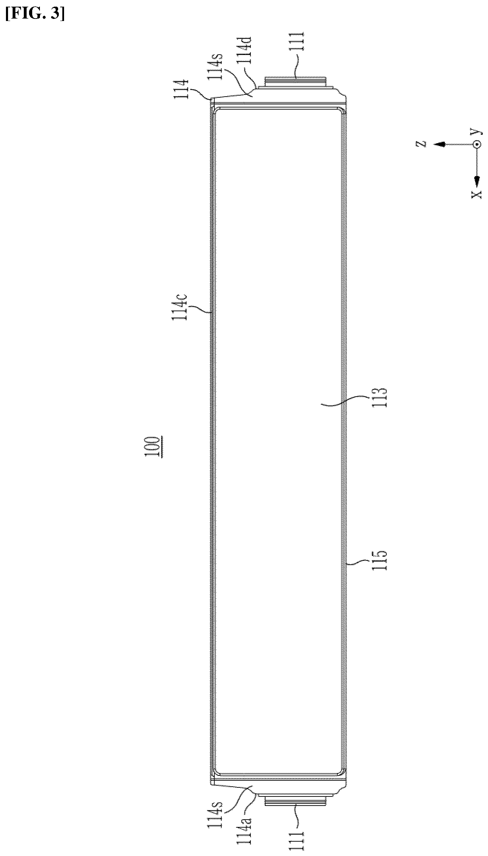

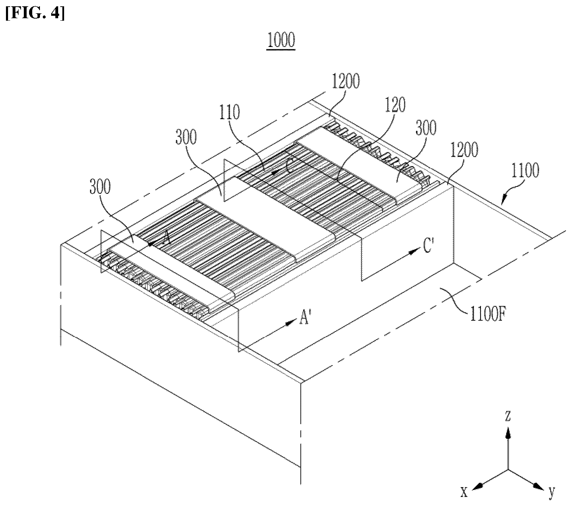

FIG. 2 is an exploded perspective view showing a battery cell stack, a side plate, a connecting member, and a thermal resin plate according to an embodiment of the present disclosure. FIG. 3 is a plan view showing one of the battery cells included in the battery cell stack of FIG. 2. FIG. 4 is a perspective view showing a battery pack according to an embodiment of the present disclosure. In particular, FIG. 4 illustrates a state in which the battery cell stack 120 and the like of FIG. 2 is mounted on a pack frame 1100.

Referring to FIGS. 2 to 4, a battery pack 1000 according to an embodiment of the present disclosure includes a battery cell stack 120 in which a plurality of battery cells 110 are stacked along one direction; a pack frame 1100 that houses the battery cell stack 120; and a thermal resin plate 400 located between the battery cell stack 120 and the bottom portion 1100F of the pack frame 1100.

The battery cell 110 according to the present embodiment is a sheet shape having a certain thickness, and the battery cells 110 can be disposed vertical to one surface of the bottom portion 1100F of the pack frame 1100. For example, the battery cell 110 may be a pouch-type battery in which an electrode assembly having electrode leads 111 protruding in one or both directions is housed in a pouch case 114. However, this is only one example, and the battery cell according to another embodiment of the present disclosure may be a prismatic battery cell.

For convenience of explanation, the battery cell 110 which is a pouch-type battery will be mainly described.

The battery cell 110 may have a rectangular sheet shape. The battery cell 110 may be formed by housing an electrode assembly in a pouch case 114 made of a laminate sheet including a resin layer and a metal layer, and then bonding the outer peripheral sides of the pouch case 114. As an example, the battery cell 110 may have a structure in which two electrode leads 111 face each other and protrude from one end portion 114a and the other end portion 114b of the cell body 113. As another example, a structure in which all of the electrode leads 111 of the battery cell 110 protrude in one direction is also possible. One of the electrode leads 111 is a positive electrode lead, and the other is a negative electrode lead.

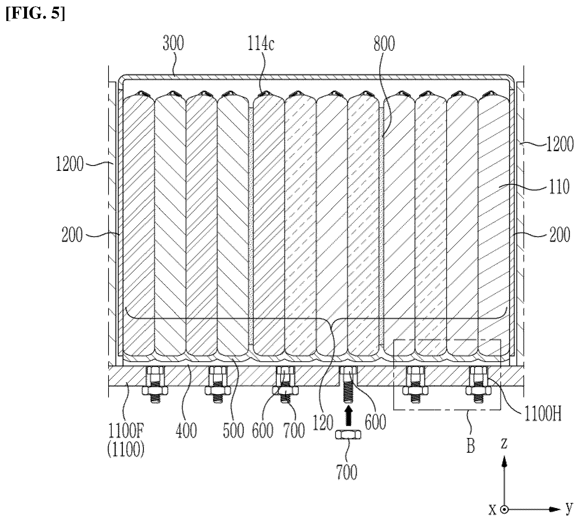

The battery cell 110 can be produced by bonding both end portions 114a and 114b of a pouch case 114 and one side portion 114c connecting them in a state in which an electrode assembly (not shown) is housed in a pouch case 114. In other words, the battery cell 110 according to an embodiment of the present disclosure has a total of three sealing portions 114s, wherein the sealing portion 114s have a structure that is sealed by a method such as fusion, and the remaining other one side portion may be composed of a folding portion 115. That is, the battery cell 110 according to the present embodiment may be a battery in which the electrode assembly is housed inside the pouch case 114, and the pouch case 114 has a sealing portion 114s formed by sealing the outer peripheral side of the portion where the electrode assembly is housed. In FIG. 3, only a state in which the sealing portions 114s are formed at both end portions 114a and 114b of the pouch case 114 are shown, and the sealing portion is not shown on an upper side, i.e., one side portion 114c, that face the folding portion 115, however, the sealing portion of one side portion 114c may be in a state being folded to one side after sealing is completed for space utilization. The one side portion 114c in a folded state is also shown in FIG. 5, which will be described below.

The pouch case 114 of the laminate sheet may include an inner side resin layer for sealing, a metal layer for preventing penetration of materials, and an outer side resin layer located on the outermost side. Based on the electrode assembly inside the pouch case 114, the inner side resin layer may be located on the innermost side, the outer side resin layer may be located on the outermost side, and the metal layer may be located between the inner side resin layer and the outer side resin layer.

The outer side resin layer has excellent tensile strength and weather resistance relative to the thickness and can have electrical insulation properties in order to protect the electrode assembly from the outside. Such an outer side resin layer may include a polyethylene terephthalate(PET) resin or a nylon resin. The metal layer can prevent air, moisture, and the like from flowing into the pouch-type secondary battery. This metal layer may include aluminum(Al). The inner side resin layers may be heat-sealed to each other by heat and/or pressure applied in a state in which the electrode assembly is embedded. This inner side resin layer may include casted polypropylene(CPP) or polypropylene(PP).

The pouch case 114 is divided into two portions, and a concave-shaped housing part in which the electrode assembly can be seated may be formed in at least one of the two portions. Along the outer circumference of this housing portion, the inner side resin layers of the two portions of the pouch case 114 may be joined to each other to provide a sealing portion 114s. The pouch case 114 is sealed in this manner, so that the battery cell 110, which is a pouch-type secondary battery, can be produced.

The battery cells 110 may be configured in a plurality of numbers, and the plurality of battery cells 110 may be stacked so as to be electrically connected to each other, thereby forming a battery cell stack 120. In particular, as shown in FIG. 2, a plurality of battery cells 110 may be stacked along one direction parallel to the y-axis in an upright state so that one side of the cell body 113 (see FIG. 3) faces the other.

That is, the battery cells 110 can be vertically disposed on one surface of the bottom portion 1100F of the pack frame 1100. Further, one direction in which the battery cells 110 are stacked can be parallel to one surface of the bottom portion 1100F of the pack frame 1100. The electrode leads 111 may protrude in a direction perpendicular to the direction in which the battery cells 110 are stacked. That is, in the battery cells 110, one electrode lead 111 can protrude toward the x-axis direction, and the other electrode lead 111 can protrude toward the -x-axis direction. If the electrode leads 111 are a battery cell in which the electrode leads 111 protrude in only one direction, the electrode leads 111 protrude in the x-axis direction or the -x-axis direction.

Meanwhile, the battery cell stack 120 may be provided in a state where a separate frame protecting the outer surface of the battery cells 110 is minimized. That is, the battery cell stack 120 of the present embodiment may have a cell-to-pack structure. Here, the cell-to-pack structure may refer to a module-less structure in which the battery cell structure is directly coupled to the battery pack structure without a module frame.

Conventionally, the conventional battery packs 1000 have a double assembly structure in which a plurality of battery cells and various parts connected thereto are assembled to form a battery module, and the plurality of battery modules are housed again in the battery pack 1000. In this case, since the battery module includes a module frame that forms its outer surface, the conventional battery cells are doubly protected by the module frame of the battery module and the pack frame 1100 of the battery pack 1000. However, this double assembly structure has the disadvantage in that not only does this increase the manufacturing cost and manufacturing process of the battery pack 1000, but also reduces reassembly performance when a defect occurs in some battery cells. In addition, if a cooling member or the like is present on the outside of the battery module, there is a problem that the heat transfer path between the battery cells and the cooling member becomes slightly complicated.

Therefore, in this embodiment, the unit module mounted on the battery pack 1000 may be provided in the form of a 'battery cell stack' in which the module frame is omitted. Through this, the structure of the battery pack 1000 may be simplified, which provides advantages in terms of manufacturing cost and manufacturing process, and provides the effect of achieving a reduction in the weight of the battery pack 1000.

The battery pack 1000 according to the present embodiment may include side plates 200 respectively arranged on both side surfaces of the battery cell stack 120 in the direction in which the battery cells 110 are stacked. Further, the battery pack 1000 may further include a connecting member 300 that connects the side plates 200.

The side plates 200 are located on both side surfaces of the battery cell stack 120 so as to support the battery cell stack 120. More specifically, they can be located on both side surfaces of the direction in which the plurality of battery cells 110 are stacked, i.e., the direction parallel to the y-axis in FIG. 2.

The connecting member 300 may be a band member that connects the side plates 200 at the upper portion of the battery cell stack 120. The connecting member 300, which is a band member, may include an elastic metal material and may be provided in one or more of portions. In the case of the connecting members 300 arranged in plural portions, they may be located spaced apart from each other at a certain interval. In FIGS. 2 and 4, as an example, three connecting members 300 are disposed on the upper portion of the battery cell stack 120. However, such connecting members 300 are not necessarily provided in the battery pack 1000 as an exemplary structure. That is, in another embodiment of the present disclosure, only the side plates 200 may be provided on both side surfaces of the battery cell stack 120 without a connecting member.

The present embodiment does not have a form in which the battery cell stack 120 is housed and sealed in the module frame, but may have a configuration in which side plates 200 are arranged on both side surfaces of the battery cell stack 120 and the side plates 200 are fixed through connecting members 300. In other words, compared to conventional battery modules, this embodiment has a form in which the module frame is omitted, and the battery module can be directly attached to a battery pack without a sealed module frame.

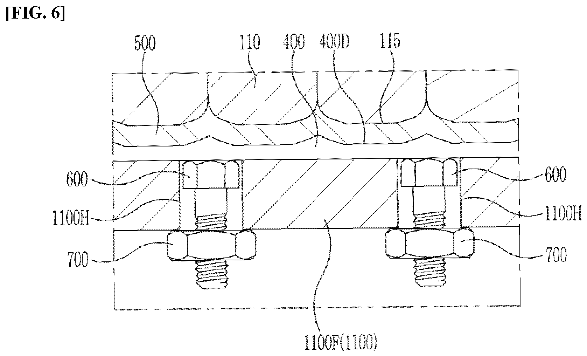

FIG. 5 is a cross-sectional view showing a cross section cut along the cutting line A-A' of FIG. 4. FIG. 6 is a partially enlarged view of the portion "B" of FIG. 5. In particular, FIG. 5 is a cross-sectional view showing a portion where a bolt 600 is provided in a thermal resin plate 400.

Referring to FIGS. 2, 4, 5, and 6, when the battery cell stack 120 is attached to the bottom portion 1100F of the pack frame 1100, the thermal resin plate 400 according to the present embodiment is located between the battery cell stack 120 and the bottom portion 1100F of the pack frame 1100.

The pack frame 1100 may be a box-shaped structure in which an upper portion that houses the battery cell stack 120 is made open. A pack cover (not shown) may be located on the opened upper portion of the pack frame 1100. Further, at least one vertical beam 1200 may be located on the bottom portion 1100F of the pack frame 1100 to fix the position of the battery cell stack 120.

A thermal resin layer 500 formed by applying thermal resin is located on one surface of a thermal resin plate 400, and the battery cell stack 120 is fixed to the thermal resin layer 500.

The thermal resin may include a thermally conductive adhesive material, and specifically, it may include at least one of a silicone material, a urethane material, or an acrylic material. This thermal resin layer 500 has excellent thermal conductivity properties and can quickly discharge heat generated from the battery cell 11 to the outside. In addition, since the thermal resin layer 500 has adhesive properties, it can fix a plurality of battery cells 11 constituting the battery cell stack 120.

The thermal resin plate 400 according to the present embodiment is detachably coupled to the pack frame 1100. This thermal resin plate 400 may be a plate-shaped plate having a predetermined thickness, and may be a plastic member, a metal member, or an insulating-coated metal member. As an example, the thermal resin plate 400 and the pack frame 1100 may be coupled by a mechanical fastening method.

The conventional battery pack shown in FIG. 1 has a structure in which the battery cells 11 are directly bonded to the bottom portion 1100F of the pack frame 1100 through the thermal resin layer 50, which causes a problem that the bonding reliability of the battery cells 11 to the pack frame 1100 is not constant at the time of impact or vibration. In addition, when a problem occurs in the battery cell 11 and replacement is required, it is difficult to replace the battery cells 11 because the battery cells 11 are bonded to the thermal resin layer 50. In particular, if the battery cells 11 are forcibly replaced, the battery cells 11 may be damaged due to the adhesive force of the thermal resin layer 50.

On the other hand, in the battery pack 1000 according to the present embodiment, the battery cell stack 120 is bonded to the thermal resin plate 400 through the thermal resin layer 500, and the thermal resin plate 400 is detachably coupled to the bottom portion 1100F of the pack frame 1100. Therefore, since the thermal resin plate 400 is coupled to the pack frame 1100, the bonding reliability of the battery cells 110 to the pack frame 1100 can be maintained even at the time of impact or vibration. In addition, when a problem occurs in some of the battery cells 110 and replacement is required, the thermal resin plate 400 can be separated from the pack frame 1100, so that the battery cell stack 120 including the battery cell 110 which caused a problem can be easily separated and replaced with another one. That is, the battery pack 1000 according to the present embodiment has the advantage that there is no particular difficulty in replacing the battery cells 110.

Below, examples of a coupling shape of a thermal resin plate 400 and a pack frame 1100 will be described.

The thermal resin plate 400 according to one embodiment of the present disclosure may be coupled to a pack frame 1100 by a fastening method of a bolt 600 and a nut 700. A bolt 600 may be joined to the lower surface of the thermal resin plate 400. As an example, the bolt 600 may be welded and joined to the lower surface of the thermal resin plate 400. A hole 1100H may be formed in the bottom portion 1100F of the pack frame 1100, and the bolt 600 may pass through the hole 1100H of the bottom portion 1100F of the pack frame 1100 and be fastened to the nut 700.

If the thermal resin plate 400 can be firmly fixed to the pack frame 1100, the size or number of bolts 600 joined to the lower surface of the thermal resin plate 400 are not particularly limited.

The thermal resin plate 400 can be coupled to the pack frame 1100 in such a manner that the bolt 600 passes through the hole 1100H of the bottom portion 1100F of the pack frame 1100 and is fastened with the nut 700. Subsequently, the thermal resin can be applied to one surface of the thermal resin plate 400 to form a thermal resin layer 500, and the battery cells 110 may be attached on the thermal resin layer 500. If a problem occurs with the battery cell 110 and replacement is required, the battery cell 110 and the thermal resin plate 400 can be simply separated from the pack frame 1100 by releasing the coupling between the bolt 600 and the nut 700.

Meanwhile, a recessed portion 400D having a shape recessed corresponding to the lower portion of the battery cell 110 may be formed on the one surface of the thermal resin plate 400, and the recessed portion 400D is formed in plural, and the plurality of recessed portions 400D may be located in a one-to-one correspondence with each of the battery cells 110 in the battery cell stack 120. Each battery cell 110 may be seated in the recessed portion 400D. Specifically, each battery cell 110 may be attached to the thermal resin layer 500 on the recessed portion 400D.

As described above in FIG. 3, the battery cell 110 has a side portion 114c and a folding portion 115, and the sealing portion of the side portion 114c in the folded state may be located to face upward, and the folding portion 115 may be located to face downward. The recessed portion 400D of the thermal resin plate 400 according to the present embodiment may have a shape recessed corresponding to the shape of the folding portion 115 of the battery cell 110. The recessed portion 400D is formed in the thermal resin plate 400, so that the battery cells 110 may be more strongly attached to the thermal resin layer 500. This recessed portion 400D may be provided by a forging process for the thermal resin plate 400.

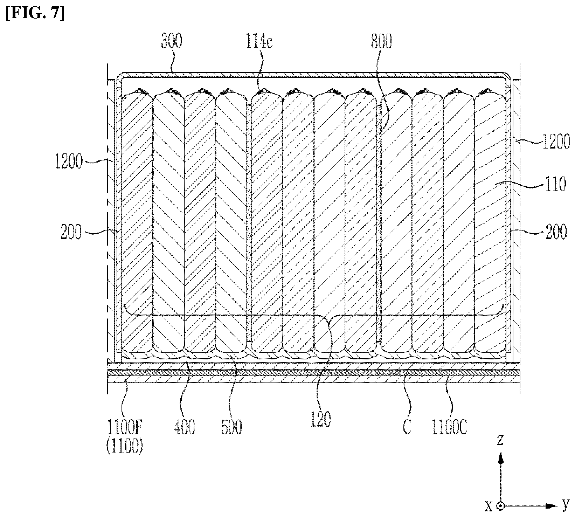

FIG. 7 is a cross-sectional view showing a cross section cut along the cutting line C-C' of FIG. 4. In particular, FIG. 7 is a cross-sectional view showing a portion where a cooling flow path 1100C is formed in the bottom portion 1100F of the pack frame 1100.

Referring to FIG. 4, 5 and 7 together, a cooling flow path 1100C may be formed inside the bottom portion 1100F of the pack frame 1100 according to the present embodiment. A coolant C for cooling the battery cell stack 120 may flow through this cooling flow path 1100C. The coolant may be, for example, cooling water. The battery pack according to the present embodiment may have a water-cooled cooling structure. The heat generated in the battery cell 110 may be discharged to the outside through the cooling flow path 1100C of the bottom portion 1100F through the thermal resin layer 500 and the thermal resin plate 400.

If effective cooling of the battery cell stack 120 is possible, the width, number, or area of the cooling flow path 1100C are not particularly limited. However, it is preferable that the cooling flow path 1100C is provided in a place where it does not interfere with the bolt 600 and the hole 1100H of the bottom portion 1100F described above. Specifically, the bolt 600 and the hole 1100H of the bottom portion 1100F according to the present embodiment can be located to avoid the cooling flow path 1100C. That is, the hole 1100H of the bottom portion 1100F can be formed in a part of the bottom portion 1100F through which the cooling flow path 1100C does not pass. More specifically, when looking at the bottom portion 1100F along a direction perpendicular to one surface of the bottom portion 1100F, the bolt 600 and the hole 1100H of the bottom portion 1100F may be located in a part where the cooling flow path 1100C is not formed. Here, the direction perpendicular to one surface of the bottom portion 1100F may be a direction parallel to the z-axis in the figure. Since the bolt 600 passes through this hole 1100H, the bolt 600 may be located to avoid the cooling flow path 1100C.

On the other hand, in the battery cell stack 120 according to the present embodiment, a compression pad 800 may be interposed between at least one of the battery cells 110. The compression pad 800 is an elastic member and can absorb swelling of the battery cells 110.

In the embodiments above, expressions indicating directions such as "front," "rear," "left," "right," "up," and "down" have been used, but these expressions are used only to facilitate the description, and may vary, for example, depending on the location of a target object or an observer.

The battery cell stack according to an embodiment of the present disclosure described above may be mounted together with various control and protection systems such as a battery management system(BMS), a battery disconnect unit(BDU), and a cooling system, to form a battery pack.

The battery pack may be applied to various devices, which include, for example, transportation vehicles such as electric bicycles, electric vehicles, and hybrids, and energy storage systems (ESS). However, without being limited thereto, the battery pack may be applied to various devices using secondary batteries.

While the embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

- 110:: battery cell
- 120:: battery cell stack
- 200:: side plate
- 300:: connecting member
- 400:: thermal resin plate
- 500:: thermal resin layer
- 600:: bolt
- 700:: nut
- 1000:: battery pack
- 1100:: pack frame

## Claims

1. A battery pack comprising:
a battery cell stack in which a plurality of battery cells are stacked along one direction;
a pack frame that houses the battery cell stack; and
a thermal resin plate located between the battery cell stack and the bottom portion of the pack frame,
wherein a thermal resin layer formed by applying a thermal resin is located on one surface of the thermal resin plate, and the battery cell stack is fixed to the thermal resin layer, and
wherein the thermal resin plate is detachably coupled to the pack frame.

2. The battery pack according to claim 1, wherein:
the battery cells are formed in a sheet shape having a certain thickness, and
the battery cells are disposed vertical to one surface of the bottom portion of the pack frame.

3. The battery pack according to claim 1, wherein:
the one direction in which the battery cells are stacked is parallel to the one surface of the bottom portion of the pack frame.

4. The battery pack according to claim 1, wherein:
the thermal resin plate is coupled to the pack frame by a fastening method of a bolt and a nut.

5. The battery pack according to claim 4, wherein:
a bolt is joined to a lower surface of the thermal resin plate,
a hole is formed in the bottom portion of the pack frame, and
the bolt passes through the hole and is fastened with a nut.

6. The battery pack according to claim 5, wherein:
the bolt is welded and joined to the lower surface of the thermal resin plate.

7. The battery pack according to claim 5, wherein:
a cooling flow path through which a coolant flows is formed inside the bottom portion of the pack frame, and
the bolt and the hole of the bottom portion are located to avoid the cooling flow path.

8. The battery pack according to claim 1, wherein:
a recessed portion having a shape recessed corresponding to the lower portion of the battery cell is formed on the one surface of the thermal resin plate.

9. The battery pack according to claim 8, wherein:
the recessed portions are configured in plural, and the plurality of recessed portions are provided in a one-to-one correspondence with each of the battery cells.

10. The battery pack according to claim 8, wherein:
the battery cells are seated on the recessed portion.

11. The battery pack according to claim 1, wherein:
a cooling flow path through which a coolant flows is formed inside the bottom portion of the pack frame.

12. A device comprising the battery pack according to claim 1.
